(19) Europäisches Patentamt
European Patent Office
Office européen des brevets

(11) EP 3 598 393 B1

(12) EUROPEAN PATENT SPECIFICATION

(45) Date of publication and mention
of the grant of the patent:
08.11.2023 Bulletin 2023/45

(21) Application number: 18183597.6

(22) Date of filing: 16.07.2018

(51) International Patent Classification (IPC):
G06T 15/00 $^{(2011.01)}$     G06T 11/40 $^{(2006.01)}$

(52) Cooperative Patent Classification (CPC):
G06T 11/40; G06T 15/005

(54) RENDERING USING A PER-TILE MSAA LEVEL

RENDERING MITHILFE EINER PER-TILE-MSAA-EBENE

RENDU UTILISANT UN NIVEAU MSAA PAR CARREAU

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(43) Date of publication of application:
22.01.2020 Bulletin 2020/04

(73) Proprietor: Huawei Technologies Co., Ltd.
Shenzhen, Guangdong 518129 (CN)

(72) Inventors:
• LIU, Baoquan
  80992 Munich (DE)
• LI, Juntao
  80992 Munich (DE)

(74) Representative: Pfenning, Meinig & Partner mbB
Patent- und Rechtsanwälte
Theresienhöhe 11a
80339 München (DE)

(56) References cited:
US-A1- 2014 327 696     US-A1- 2015 287 165
US-A1- 2016 307 297     US-A1- 2018 075 584

• Karthik Vaidyanathan ET AL: "Coarse Pixel Shading", High Performance Graphics, January 2014 (2014-01), pages 1-10, XP055537095, DOI: 10.2312/hpg.20141089 Retrieved from the Internet: URL:http://citeseerx.ist.psu.edu/viewdoc/download?doi=10.1.1.674.1958&rep=rep1&type=pdf [retrieved on 2018-12-20]
• DANIEL POHL ET AL: "Improved pre-warping for wide angle, head mounted displays", THE 19TH ACM SYMPOSIUM ON VIRTUAL REALITY SOFTWARE AND TECHNOLOGY, VRST'13; SINGAPORE; OCTOBER 6-9, 2013, January 2013 (2013-01), page 259, XP055237173, New York, NY, USA DOI: 10.1145/2503713.2503752 ISBN: 978-1-4503-2379-6

**Description**

This invention relates to rendering of images by a graphics processing unit (GPU).

Advances in computer graphics have enabled the creation of digital images of astonishing complexity and realism. However, processing power and resources are still a limiting factor and many costly but desirable aspects of realism are often not accounted for, especially in real-time rendering. At the same time, there is a strong trend towards a greater number of pixels per display due to larger displays, higher pixel densities or larger fields of view. Further observable trends in current display technology include more bits per pixel (high dynamic range, wider colour gamut/fidelity), increasing refresh rates (for better motion depiction), and an increasing number of displayed views per pixel (stereo, multi-view, etc.).

These developments cause significant technical challenges due to aspects such as limited compute power and bandwidth, especially for mobile devices powered by batteries.

Virtual Reality (VR) rendering is even more demanding due to the need to render the scene twice from two different points of view as a result of different displaying contents for the left and right eyes. This doubles the amount of vertex processing executed and the time spent executing draw calls in the central processing unit (CPU). Another challenge is the need to have high resolution scene and screen framebuffers (at least 1024p), since the lenses on a VR head mounted device magnify the pixels in the headset screen, making them more noticeable. High resolution framebuffers increase the amount of fragment processing executed for each frame. A further challenge is the need to have a high refresh rate (at least 60 Hz). This is needed to reduce the motion-to-photon latency and avoid dizziness and motion sickness caused when motion doesn't trigger the expected visual response in an expected short time.

Today, the achieved realism is already strongly limited by hardware capabilities, while often many desirable but costly aspects of reality are not even considered. This divergence causes significant issues on the technical side, such as limited compute power and bandwidth.

Real-time gaming and VR rendering are demanding for mobile GPUs due to the battery life of devices, heat dissipation, and the real-time or interactive rendering performance requirement with very low latency for a fast user response. Rendering realistic-looking 3D graphics at high refresh rates is computationally intense, particularly at high pixel densities and for wide field-of-view and stereo rendering in gaming and VR scenarios. The extremely-high display density of modern smartphones imposes a significant burden on GPU power for 3D rendering of games or VR content, yet does not always provide an improved user experience and may even lead to a compromised user experience.

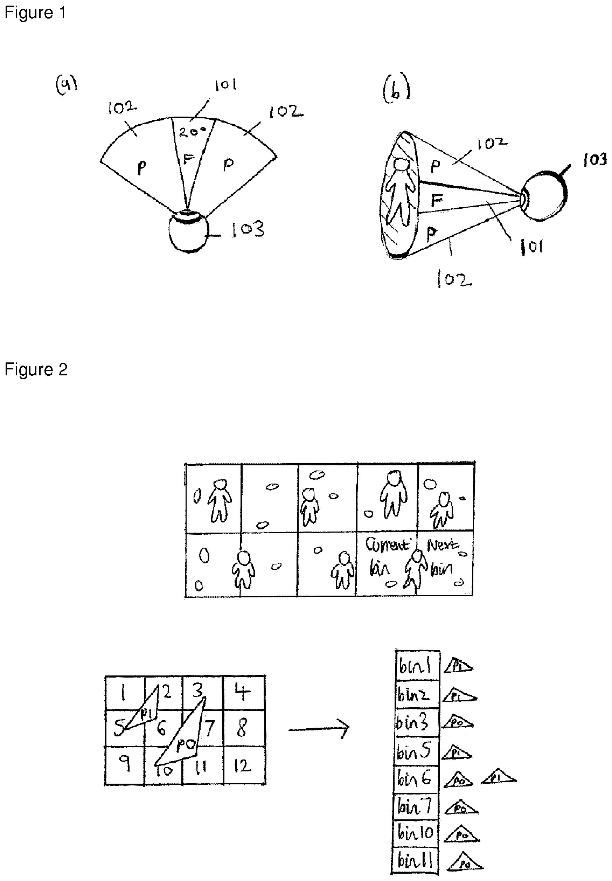

The human visual system has certain limitations, which mean that providing the highest possible visual quality is not always necessary for all screen areas. As shown in Figure 1, human vision can be divided into two components: foveal 101 and peripheral 102. Human eyes 103 can only see high resolution at the foveal area 101, while the peripheral area 102 covers a much wider field of view but lacks acuity. The "periphery" is the area surrounding the fovea which has lower resolution and thus is less capable of detecting high frequency details. Known foveated rendering techniques exploit this human visual characteristic to improve performance by decreasing the rendering complexity and quality in the periphery while maintaining high fidelity in the fovea area. Efficient peripheral rendering can unlock significant performance gains. By simplifying the fragment shading workload of the GPU, or by using variable-resolution shading, the performance and battery life of devices may be improved. As described in the foveated rendering system of GUENTER, B., FINCH, M., DRUCKER, S., TAN, D., AND SNYDER, J. 2012. Foveated 3D graphics. ACM Transactions on Graphics, 31, 6, 164:1-164:10, the resulting image looks like a full-resolution image, but the number of pixels shaded are reduced by a factor of 10-15. Given a perceptual target, a practical foveated rendering system could reduce pixel shading workload by up to 70% without introducing perceivable aliasing or blur.

Another prior art solution for multi-resolution shading splits the framebuffer into multiple viewports, in a 3x3 grid. The outer viewports are rendered at lower resolution, while the center viewport is rendered at full resolution. The developer can decide where to divide the image, as well as how aggressive the resolution differences among the areas of the 3x3 grid should be. It then broadcasts one same geometry onto 9 viewports in a single geometry pass, in order to avoid the overhead of re-submitting draw calls multiple times (once per viewport) by the applications. By varying the rendering resolution among the 3x3 grids, fewer pixels need to be shaded, reducing workload (processing and bandwidth) of the pixel shader stage, leading to faster rendering. 30 to 50% performance boosts have been measured (best when pixel-bounded). However, this method only supports coarse granularity splitting of the screen by using a fixed number of viewports. For finer granularity of splitting with more viewports than 3x3, it is very costly for the hardware to broadcast geometry to so many viewports.

A further solution is disclosed in WO 2016/171816 A1. A non-uniform rasterizer is configured to implement an edge function to determine a center of a tile and to navigate to scaled pixels within a tile. This solution uses a special tile storage logic to store tiles in memory by allocating a mip-map hierarchy to virtual memory and storing each tile of the image to a level in the mip-map hierarchy. However, non-uniform rasterizer logic is much more complex and costly than the uniform rasterizer logic used in most modern GPUs and the special tile storage logic is also complex.

To support varying rate multi-resolution rendering on the GPU, prior art techniques need to make significant modifications to the uniform rasterizer of existing GPU hardware in order to implement a non-uniform rasterizer. These techniques are also not able to vary the shading rate at multiple resolutions in order to dynamically match VR lens-distortion or foveation location tracking at runtime. Furthermore, some prior techniques require a non-regular framebuffer memory structure, such as a mip-map hierarchy, to store the rendering result, which is hard to implement on current hardware.

It is desirable to develop a method of achieving variable rendering resolution that is less costly and easy to implement for both regular gaming and VR applications.

US 2014/0327696 A1 discusses a method for using multisample anti-aliasing hardware to generate a higher resolution image at the processing of a lower resolution image with the anti-aliasing.

K. Vaidyanathan et al: "Coarse Pixel Shading", XP055537095, pages 1 -10, discusses an architecture for flexible control of shading rates in a GPU pipeline by decoupling shading and visibility by restricting and quatizing shading rates to a finite set of screen-aligned grids.

US 2015/0287165 A1 discusses a GPU configured to receive metadata specifying an active sample configuration for a particular region of a display device.

US 2018/0075584 A1 discusses techniques for varying image quality rendering based on adapting the MSAA rate for tiles of the image.

SUMMARY OF THE INVENTION

According to a first aspect, there is provided a device for rendering an image in a graphics processing system, the image being divided into a plurality of tiles, each tile having equal size and corresponding to several display pixels, the device being configured to, for at least some of the tiles: calculate, for a tile, in dependence on the prominence of the tile, a sampling density for the respective tile; determine, for each of a set of rendering pixels overlapping the tile, a set of one or more shading samples, each shading sample representing a shade at a respective location on the tile and the locations collectively having the calculated sampling density in the rendering pixel; determine in dependence on the shading sample(s) of a rendering pixel one or more pixel shade values for display pixels overlapping that rendered pixel. The device is further configured to determine the sampling density of the tile based on a scale down factor which depends on the prominence of the tile; wherein the device is configured to calculate the scale down factor so that for the tile located at the center area of the lens, the scale down factor is set to 1.0, whereas for the less prominent tiles a smaller scale down factor is calculated that is less than 1.0 based on the respective tile's distance to the foveal area and based on a lens distortion map of a virtual reality lens via 2D texture sampling at the respective tile's location. This may minimize the workload of the GPU hardware and as a result, mobile battery life may be saved, the frame-rate may be improved and the shading workload significantly reduced for complex and demanding game rendering and VR rendering on mobile GPUs.

The sampling density may correspond to a multisample anti-aliasing (MSAA) level. MSAA is supported on virtually all current GPUs, allowing for easy implementation of the invention on current systems.

The device may be configured to apply the shading samples for a rendered pixel to one or more display pixels. This may allow a single shaded sample to be applied to multiple display pixels in a simple post-processing step.

All tiles of the image may have the same display resolution. The rendering resolution for at least some of the tiles may be different to the display resolution of the tiles. The display resolution could be multiple times higher than the rendering resolution for each tile. As a result, the total number of rendered pixels could be multiple times smaller than the total number of final displayed pixels and there may be a multiple times saving of rendering workload.

The prominence of each tile may be based on a lens distortion map for the image, a distance of the respective tile from an eye-tracked foveal location, and/or a colour variation of the respective tile and/or a minimum depth value of the respective tile. A high shading rate may therefore be only used for the necessary pixel-tiles, but all other tiles will be rendered at lower shading rate in order to minimize the hardware's workload to a large degree. Using a reduced rendering rate for some particular areas may still achieve the same user experience, but may achieve both a higher rendering framerate and improved GPU power efficiency.

According to a second aspect there is provided a method for rendering an image in a graphics processing system, the image being divided into a plurality of tiles, each tile corresponding to one or more display pixels, the method comprising, for at least some of the tiles: calculating, for a tile, in dependence on the prominence of the tile, a sampling density for the respective tile; determining, for each of a set of rendering pixels overlapping the tile, a set of one or more shading samples, each shading sample representing a shade at a respective location on the tile and the locations collectively having the calculated sampling density in the rendering pixel; determining in dependence on the shading sample(s) of a rendering pixel one or more pixel shade values for display pixels overlapping that rendered pixel. The sampling density of the tile is determined based on a scale down factor which depends on the prominence of the tile; wherein the scale down factor for the tile is calculated so that for the tile located at the center area of the lens, the scale down factor is set to 1.0, whereas for less prominent tiles a smaller scale down factor is calculated that is less than 1.0 based on the respective tile's distance to the foveal area and based on a lens distortion map of a virtual reality lens via 2D texture sampling at the respective tile's location. This may minimize the workload of the GPU hardware and as a result, mobile battery life may be saved, the frame-rate may be improved and the shading workload significantly reduced for complex and demanding game rendering and VR rendering on mobile GPUs.

The sampling density may correspond to a multisample anti-aliasing level. MSAA is supported on virtually all current GPUs, allowing for easy implementation of the invention on current systems.

The shading samples for a rendered pixel may be applied to one or more display pixels. This may allow a single shaded sample to be applied to multiple display pixels in a simple post-processing step.

All tiles of the image may have the same display resolution. The rendering resolution for at least some of the tiles may be different from the display resolution of the tiles. The display resolution could be multiple times higher than the rendering resolution for each tile. As a result, the total number of rendered pixels could be multiple times smaller than the total number of final displayed pixels and there may be a multiple times saving of rendering workload.

The prominence of each tile may be based on: a lens distortion map for the image, a distance of the respective tile from an eye-tracked foveal location, and/or a colour variation of the respective tile and/or a minimum depth value of the respective tile. A high shading rate may therefore be only used for the necessary pixel-tiles, but all other tiles will be rendered at lower shading rate in order to minimize the hardware's workload to a large degree. Using a reduced rendering rate at some particular areas may still achieve the same user experience, but may achieve both a higher rendering framerate and improved GPU power efficiency.

According to a third aspect there is provided a non-transitory computer readable storage medium having stored thereon computer readable instructions that, when executed at a computer system, cause the computer system to perform a method for rendering an image in a graphics processing system, the image being divided into a plurality of tiles, each tile corresponding to one or more display pixels, the method comprising, for at least some of the tiles: calculating, for a tile, in dependence on the prominence of the tile, a sampling density for the respective tile; determining, for each of a set of rendering pixels overlapping the tile, a set of one or more shading samples, each shading sample representing a shade at a respective location on the tile and the locations collectively having the calculated sampling density in the rendering pixel; determining in dependence on the shading sample(s) of a rendering pixel one or more pixel shade values for display pixels overlapping that rendered pixel. The sampling density of the tile is determined based on a scale down factor which depends on the prominence of the tile; wherein the scale down factor for the tile is calculated so that for the tile located at the center area of the lens, the scale down factor is set to 1.0, whereas for less prominent tiles a smaller scale down factor is calculated that is less than 1.0 based on the respective tile's distance to the foveal area and based on a lens distortion map of a virtual reality lens via 2D texture sampling at the respective tile's location.

BRIEF DESCRIPTION OF THE FIGURES

Figure 1 illustrates foveal and peripheral vision in a human eye.

Figure 2 illustrates binning in Tile-Based Rendering.

Figure 3 illustrates areas which do not need to be rendered at high resolution.

Figure 4 illustrates the shading rate distribution after lens warp across a single view on a VR device.

Figure 5 shows a possible configuration for VR rendering. The MSAA level is set to 16x for the tiles at the VR lens center or at the foveal area. The MSAA level is set to 4x for the tiles at the transition area. The MSAA level is set to 1x for all peripheral tiles. As a result, different tiles are rendered at different MSAA levels.

Figure 6 illustrates tiles which are rendered at different sample rates from each other.

Figure 7: (a) Rendering with a MSAA level of 4x, with two covered samples (out of the total 4 samples); (b) Four pixels are rendered with an MSAA level of 16x.

Figure 8 illustrates the mapping of a sample-grid (shown as the thick lines) into 1, 4, or 16 final pixel-grids (shown as the thin lines).

Figure 9 illustrates an example of a method for rendering an image.

Figure 10 illustrates an example of a device for performing rendering.

DETAILED DESCRIPTION OF THE INVENTION

The present invention is a modification of Tile-based Rendering (TBR) techniques. Almost all mobile GPUs use TBR, instead of Immediate Mode Rendering (IMR) used in desktop GPUs. As shown in Figure 2, in TBR, the framebuffer is partitioned into many tiles 1-12. All primitives, such as P0 and P1, are binned for each tile and then stored in linked-list data structure. Each tile maintains one list of primitives, called the Polygon List (PL), containing all the primitives that cover this tile.

TBR consists of two separate phases: a binning pass and a per-tile rendering pass. In the binning pass, all post-transformed geometry primitives are binned into the tiles. Only after the binning pass is finished, the rendering pass can then load in the PL data and perform rasterization and fragment shading on a per-tile basis.

The tiles may be rectangular (including square, as in the example in Figure 2), but they could be other shapes such as triangular or hexagonal. Tiles can be various sizes. For example, tiles may be 32 x 32 pixels or 64 x 64 pixels.

In the technique described herein, modifications may be made only to the per-tile rendering pass, but the binning pass may be implemented in the same way as traditional TBR techniques.

Multi-sample anti-aliasing (MSAA) is a type of spatial anti-aliasing technique used in computer graphics to improve image quality. MSAA is supported on virtually all current GPUs. MSAA uses multiple sampling locations (e.g., 1x, 2x, 4x, 8x, 16x, or 32x) within each pixel. According to the OpenGL GL_ARB_multisample specification, the GPU renderer evaluates the fragment program only once per pixel, and samples the depth and stencil values multiple times per pixel (at every sample location within a pixel). In traditional multi-sample anti-aliasing, if any of the multi-sample locations in a pixel are covered by a triangle being rendered, a shading computation must be performed for that triangle. However, this calculation only needs to be performed once for the whole pixel regardless of how many sample positions are covered and the result of the shading calculation is applied to all of the relevant covered multi-sample locations equally.

In traditional TBR solutions, all tiles are rendered with one same MSAA level. In the present invention, a tile may have a different MSAA level from other tiles. In this way, the shading rate is controlled and varied by setting different MSAA levels for different tiles in order to significantly reduce the shading workloads for those tiles which do not require a very high shading resolution. For the tiles which do not require a high shading resolution, a low MSAA level is set. All tiles have the same pixel resolution (i.e., the tile size) but the tiles may have different MSAA levels during the rendering pass.

Before the rendering pass, the driver calculates a specific MSAA level for each tile, based on a down-scale factor calculated specifically for the tile. The down-scale factor for each tile depends on the prominence of the tile. The less prominent the tile, the smaller the down-scale factor. The down-scale factor may be less than or equal to 1.

This *ScaleFactor* could be, for example, 1, 1/4, or 1/16 (if X and Y directions are treated equally).

For VR applications, the GPU driver needs input from the VR applications in order to calculate the down-scale factor for each individual tile. There are two VR inputs to the driver:

1). A fovea location, for example from an eye tracker, based on a quality attenuation function. This could be implemented as a 2D texture map based on the distance of a tile to the fovea location in order to control the quality falloff rate along X and Y within the whole framebuffer range. For VR rendering, most pixels are peripheral. The peripheral region covers a much wider field of view but lacks acuity. The tiles at the peripheral region are less prominent than the tiles at the foveal region. Decreased rendering resolution (i.e. a low shading sample rate) can be used at the peripheral tiles, while at the same time maintaining high rendering resolution (i.e. a high shading sample rate) at the foveal tiles.

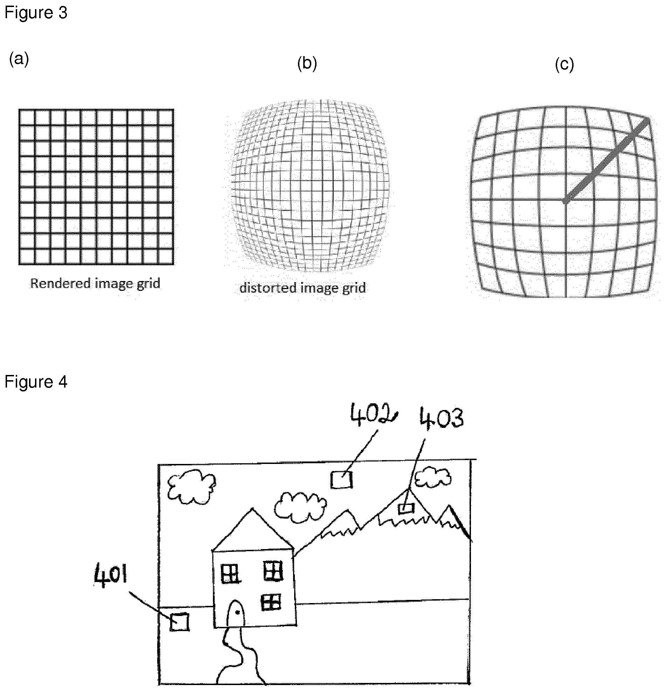

2). A lens distortion map of the VR lens. This could be implemented as a 2D texture map, which indicates the lens's distortion grid density map within the whole framebuffer range. At the end of the rendering pipeline of all VR applications, one of the steps is lens distortion, which warps the rendered image (Figure 3(a)) according to the HMD lens profile, so that when the post-warped image (Figure 3(b)) is viewed through the lens, it appears to be undistorted again. The side effect of this lens distortion is that it changes the shading rate of the original image drastically, as shown in Figure 3(c). It significantly squashes the periphery of the image, while enlarging the centre. This makes the periphery shading rate higher and the centre shading rate lower compared to the original rendered image. The shading rate distribution after lens distortion is not ideal since the periphery, which is less prominent, receives many more shades than the central region. But, viewers usually tend to focus their attention at the centre of the screen, which places these over-sampled areas in the weaker peripheral vision. Figure 3(c) illustrates this kind of non-uniform shading rate distribution across a single view on a VR system, which shows that the enlarged central area needs higher shading rate, while the squashed peripheral area needs lower shading rate. Using this kind of lens distortion map (based on lens profile) as an input to the rendering system could prevent under-sampling at the central region and oversampling at the peripheral area.

For tiles located at the center area of the lens or at the foveal area, the scale factor of the tiles is set to *ScaleFactor* = 1.0. This means that no downscaling is needed for these tiles, so the original storage resolution of these tiles will be used for rendering also. For less prominent tiles, a smaller *ScaleFactor,* is calculated that is less than 1.0, based on the tile's distance to the foveal area and based on the lens distortion map via 2D texture sampling at the current tile's location.

For general mobile game rendering, the per-tile *ScaleFactor* can be calculated based on the following two observations. These factors may also be used, at least in part, to calculate the scale factor for VR applications along with the foveal distance and lens distortion parameters.

1). Some tiles may not require a high shading sample rate because they have a long z distance to the camera. Therefore, the per-tile *ScaleFactor* can be calculated based on the minimum depth value of this tile (minimum z distance to the camera), which is usually recorded in the coarse z-buffer for all tiles of the current frame during the binning pass. Since the minimum depth values of all tiles have already been accumulated from z-values of all primitives that cover this tile during the binning pass, in the rendering pass they can be used directly for the same frame to calculate the *ScaleFactor* for each tile. The larger a tile's minimum depth value is, the less prominent a tile is. Therefore, the larger a tile's minimum depth value is, the smaller a tile's *ScaleFactor* should be, and the lower its rendering resolution will be (i.e. it will be rendered more coarsely).

2). Some tiles may not require a high shading sample rate due to them having a low colour variation within a tile. This is illustrated in Figure 4, where areas 401, 402 and 403, corresponding to grass, sky and snow respectively, have low colour variances within their respective tiles. Other areas with low colour variance in images may include areas depicting roads, walls, panels etc. These tiles with low colour variance are less prominent than those tiles with a high colour variance. Therefore, the per-tile *ScaleFactor* can be calculated based on a tile's colour variance of all pixels from the on-chip tile buffer, e.g, variance of luminance (i.e., Y channel of YUV colour space). At the rendering pass, the final colour values are not available in the tile buffer for the current frame, so the last frame's colour variance is used as an approximation, which can be calculated and stored at the end of the last frame's rendering pass when the on-chip tile buffer for the last frame is still available, before it is resolved to the external memory. The smaller a tile's colour variance is, the smaller the tile's *ScaleFactor* should be, and the lower its rendering resolution (i.e. shading sample rate) will be.

For these less prominent tiles, a low shading rate may be applied to them in order to significantly reduce the shading workload by rendering them more coarsely, but still maintaining the perceived image quality.

Therefore, before the rendering pass, the driver calculates the down-scale factor for each individual tile in order to vary the pixel shading rate for a specific tile via a per-tile MSAA level. This *ScaleFactor* could be 1, 1/4, or 1/16 (if X and Y directions are treated equally), which corresponds to a MSAA level given by the equation below, where max_msaa is the maximum MSAA level that the current GPU hardware can support:

$$msaa\_level = max\_msaa * ScaleFactor.$$

For VR applications, a new OpenGL extension must be opened for applications to pass the VR inputs (the foveation parameters and lens parameters) to the driver. Based on 2D texture-sampling to the distortion map of the VR lens and the quality attenuation function (based on the distance to the foveal area) at each tile's specific location, for the tiles located at center area of the lens or at the foveal area, *ScaleFactor* = 1.0. This means that no downscaling is needed for these tiles, so the original storage resolution of these tiles will also be used for rendering. For each of the other tiles, a smaller *ScaleFactor* is calculated that is less than 1.0, based on the factors described above.

A down-scale factor may be calculated for each tile individually, or alternatively a down-scale factor may be calculated for one tile in a block of neighboring tiles and that factor may then be assigned to all tiles in that block.

After the down-scale factor has been calculated or assigned to each tile as described above, at the rendering pass for a tile, the GPU driver calculates the MSAA level for the tile using the tile's *ScaleFactor.* Each tile's MSAA level may be different from that of other tiles for the same frame. For example, the MSAA level for a given tile may be 1x, 2x, 4x, 8x, 16x, or 32x that of other tiles.

For example, if a GPU supports a maximum MSAA level, max_msaa, of 16, then the foveal area, with ScaleFactor = 1.0, will be rendered with an MSAA level of 16. This corresponds to the highest shading rate (i.e., rendering quality) that can be achieved on this GPU. For other areas with smaller scale-factors, these tiles will be rendered more coarsely, with a smaller MSAA_level. For example, if ScaleFactor = 1/4, then msaa_level = 4. If ScaleFactor = 1/16, then msaa_level = 1.

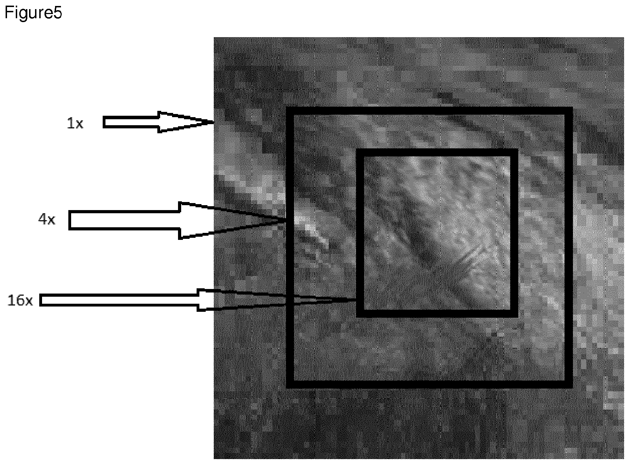

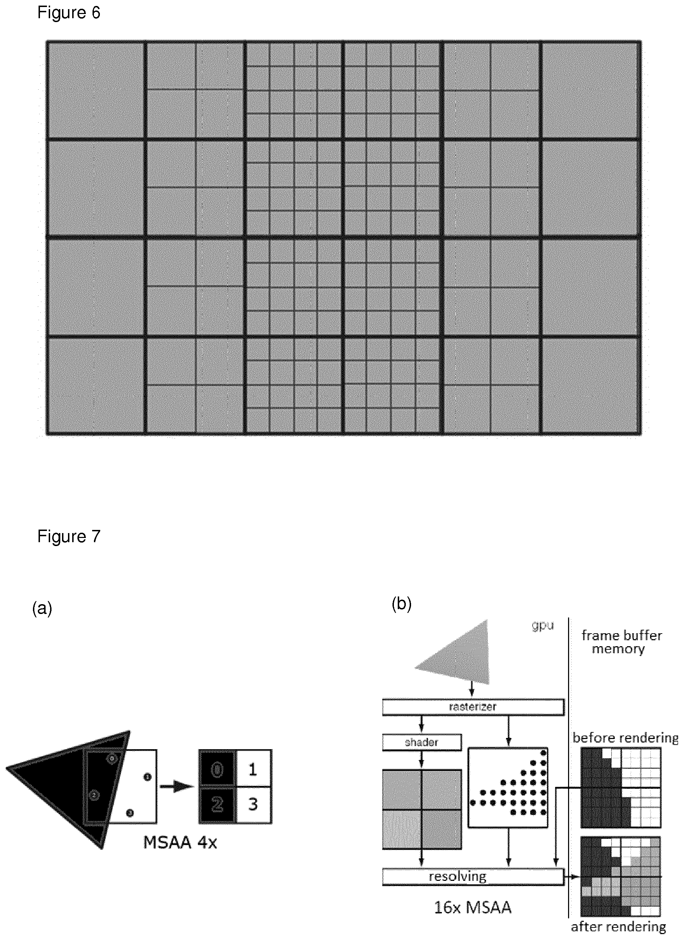

A possible configuration for VR rendering may be as shown in Figure 5, where the MSAA level is set to 16x for the tiles at the VR lens center or at the foveal area, to 4x for the tiles at the transition area, and to 1x for all the peripheral tiles. As a result, different tiles are rendered at different MSAA levels, to achieve per-tile variable rate shading. Figure 6 further illustrates an image with tiles which are rendered at different sample rates to each other.

A temporary on-chip tile-buffer with a low resolution of *TileRendering* and an MSAA level of *msaa_level* on the GPU is then allocated, into which the GPU will render this tile at this MSAA level. As a result, a rendered pixel may contain multiple samples, specified by *msaa_level*, and the multiple samples per pixel will represent a specific shading rate for this tile, which may be different from other tiles.

By rendering using this MSAA level, the result of the shading calculation for one pixel is simply assigned to the relevant multi-sample locations equally if covered by a primitive, as shown in Figure 7. Figure 7(a) shows rendering performed with an MSAA level of 4x, with two covered samples (out of its total four samples). Figure 7(b) shows four pixels rendered with an MSAA level of 16x.

Like prior TBR approaches, the storage or display resolution (i.e., *tile.width* and *tile.height*) in pixels is still the same for all the tiles, which results from splitting the framebuffer into multiple rectangle tiles of the same size, which will also be the final tile resolution after restoring the MSAA samples into final pixels. However, unlike prior TBR approaches, which both render and store all the screen tiles at the same resolution, all tiles are rendered at a same low resolution (i.e., *TileRendering.width, TileRendering.height*), but different MSAA levels are used for different tiles. Usually, three or four different MSAA levels will be enough for most applications. In the description above, three levels are used for illustration purposes, i.e., *total_msaa_level=3,* which means there are three levels of 1x, 4x, and 16x, that is *pow(4, i), where i=0, 1, ...,total_msaa_level-1.* Here, total_msaa_level -1 = log(4, max_msaa). After rendering of a tile, each MSAA sample will be restored into one or more final pixels. All tiles are rendered at the same lowest possible resolution of:

$$TileRendering.width = Tile.width / pow(2, total\_msaa\_level\text{-}1);$$

$$TileRendering.height = Tile.height / pow(2, total\_msaa\_level\text{-}1)$$

which should match the total sample number of a tile at the lowest MSAA level (i.e., 1x).

Therefore, in the present invention, the per-tile rendering resolution (i.e., *TileRendering.width, TileRendering.height*) is the same for all tiles. The rendering resolution of (*TileRendering.width, TileRendering.height*) may be multiple times lower than the final tile resolution of (*Tile.width, Tile.width*) for the final display.

The per-tile storage/display resolution (i.e., *tile.width* and *tile.height*) is also the same for all tiles. However, the per-tile rendering resolution is different from the per-tile storage/display resolution, due to the different MSAA levels used for the rendering of different tiles.

The storage/display resolution could be multiple times higher than the rendering resolution for each tile. As a result, the total number of rendered pixels could be multiple times smaller than the total number of final displayed pixels and there is a multiple times saving of rendering workload.

Finally, after rendering of a tile, the final full resolution of the tile (i.e., *tile.width, tile.height*) is restored from the rendered low-resolution tile buffer by a simple 2D post-process, before resolving it to the external memory for the final display. The post-process is based on a mapping of the MSAA sample-grid's coverage onto the final pixel-grids in the high resolution tile-buffer. Each shaded sample will be restored into one or multiple final pixels into the final high resolution tile buffer for resolving it the external memory for final display.

This post-process assigns each shaded MSAA sample value from the temporary on-chip tile-buffer with a low resolution of [*TileRendering.width, TileRendering.height*] to one or multiple final pixels in the final on-chip tile-buffer with a high resolution of [*Tile.width, Tile.height*]. There is a one-to-many mapping for this value-assigning operation, since all tiles are rendered at the lowest possible resolution of:

$$TileRendering.width = Tile.width / pow(2, total\_msaa\_level\text{-}1);$$

$$TileRendering.height = Tile.height / pow(2, total\_msaa\_level\text{-}1)$$

The current tile has an MSAA level of *msaa_level,* which could be for example 1x, 4x, or 16x. This means that each rendered pixel will cover multiple number of final pixels (that is *pow(4, total_msaa_level-1),* i.e., 16 if *total_msaa_level=3*) when the two on-chip tile-buffers with different resolutions are aligned to the same texture-address range. A shaded sample-grid's texture address from the low resolution temporary tile buffer is mapped into the high resolution final tile buffer by aligning the two tile buffers both to the same texture-address range of [0,1].

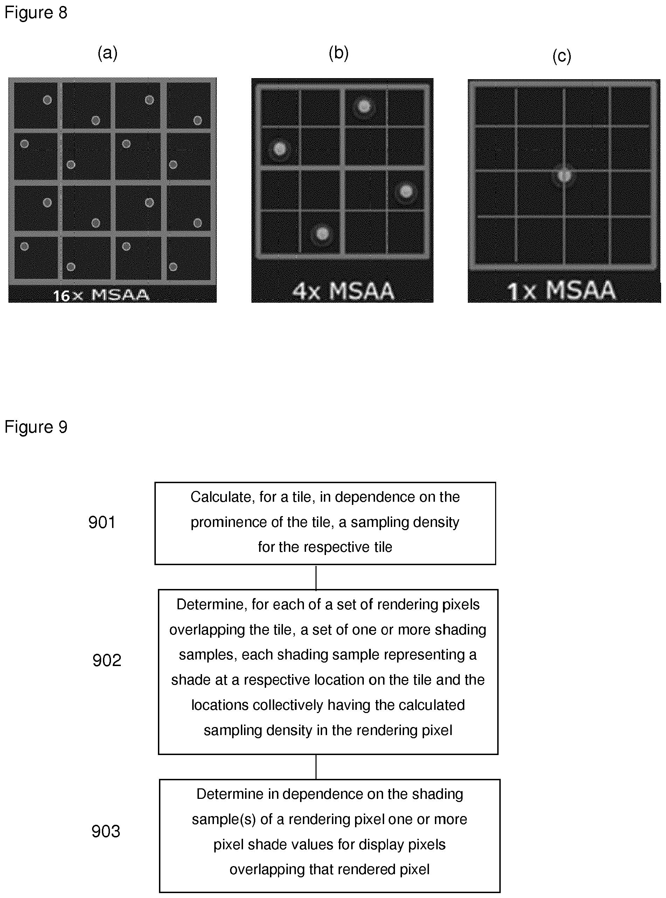

Figure 8 illustrates the mapping of a sample-grid (shown as thick lines) into 1, 4, or 16 final pixel-grids (shown as thin lines). In this example, there are 16 final pixels. For example, if the current tile's *msaa_level* is 16x, each sample-grid covers exactly one final pixel grid, as shown in Figure 8(a). In this case, each shaded sample is mapped and assigned into exactly one final pixel in the high resolution tile buffer, based on the sample-grid's texture address.

If the tile's *msaa_level* =4x, each sample grid, shown as the thick line in Figure 8(b), covers four final pixel-grids' addresses, shown as the thin line in Figure 8(b). Each shaded sample is mapped and assigned into these four final pixels which are under its coverage in the high resolution tile buffer, based on the sample grid's coverage of texture address.

If the tile's *msaa_level* =1x, each sample grid should cover all 16 final pixel-grids' addresses, as shown in Figure 8(c), each shaded sample is simply mapped and assigned to all sixteen final pixels under its coverage in the high resolution tile buffer, and there is no need to calculate the sample's coverage of texture address.

Because the 2D post-processing is performed completely inside the on-chip GPU memory, no external memory access, and the associated cost, is required. Both the low resolution rendering tile buffer and the final high resolution tile buffer are allocated in the on-chip GPU memory. Therefore, no external memory access is required for the post-processing.

Figure 9 illustrates an example of a method for rendering an image in a graphics processing system according to the present invention. The image is divided into a plurality of tiles, each tile corresponding to one or more display pixels. For at least some of the tiles, the method comprises at 901 calculating, for a tile, in dependence on the prominence of the tile, a sampling density for the respective tile. The method further comprises at 902 determining, for each of a set of rendering pixels overlapping the tile, a set of one or more shading samples, each shading sample representing a shade at a respective location on the tile and the locations collectively having the calculated sampling density in the rendering pixel. At 903, the method continues with the step of determining, in dependence on the shading sample(s) of a rendering pixel, one or more pixel shade values for display pixels overlapping that rendered pixel.

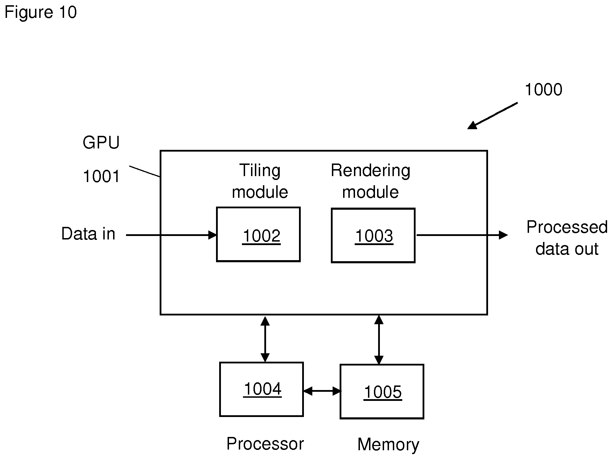

Figure 10 is a schematic representation of a tile-based graphics system 1000 configured to perform the methods described herein. The system 1000 may be implemented on a device, such as a laptop, tablet, smart phone, TV or any other device in which graphics data is to be processed.

System 1000 is configured to receive data, for example from an application, process the data and output the processed data. The system 1000 comprises a graphics processor 1001 configured to process the data. For example, the processor 1001 may be a GPU. Alternatively, the processor 1001 may be implemented as a computer program running on a programmable device such as a GPU or a Central Processing Unit (CPU). The graphics processor 1001 comprises a tiling module 1002 and a rendering module 1003.

The system 1000 also comprises a processing unit 1004 configured to process data. For example, the processor 1004 may be a general purpose CPU. Alternatively, processor 1004 may be implemented as a computer program running on a programmable device such as a GPU or CPU.

The system 1000 comprises a memory 1005 which is arranged to communicate with the graphics processor 1001 and processor 1004. The graphics processor 1001 may also comprise a cache (not shown in Figure 10), which may be used to temporarily store data from memory 1005.

The graphics processor 1001 is configured to receive graphics data comprising data which defines objects that are to be displayed. The tiling module 1002 receives the data and derives a plurality of primitives from the data. The tiling module 1002 also divides the image into a plurality of tiles according to known TBR techniques.

The rendering module 1003 is configured to render the primitives of at least some of the tiles of the image according to the methods described herein.

The present invention exploits the limitations of human perception ability to tackle visual quality and rendering workload for both gaming and VR rendering. Human visual perception is utilized along with the ability to achieve both high rendering speed and low power consumption at the same time without degrading the user experience by using an optimization of lazy rendering by varying the MSAA level on mobile GPUs. Therefore, the GPU hardware's rendering efforts can be minimized while still offering a full visual experience for human users.

The above technique performs rendering at varying shading rate for different tiles. A high shading rate is only used for the necessary pixel-tiles, but all other tiles will be rendered at lower shading rate in order to minimize the hardware's workload to a large degree. A reduced rendering rate at some particular, less prominent areas may still achieve the same user experience, but achieves both a higher rendering framerate and improved GPU power efficiency at the same time. As a result, mobile battery life may be saved, the frame-rate may be improved and the shading workload significantly reduced for complex and demanding game rendering and VR rendering on mobile GPUs.

The invention is also conveniently compatible with eye tracking techniques. The scale factor can be dynamically calculated at runtime for each individual tile according to its distance to the fovea location tracked from an eye tracker. The solution described herein can vary all tiles' shading rates individually, according to the Eye-Tracking result at each frame.

The invention is also compatible with Lens Distortion Matching, since the down-scale factor can be calculated for each tile according to the lens distortion distribution density at each tile's location. The solution is very flexible and can vary each tile's shading rate individually according to VR foveation inputs or the lens distortion distribution at each particular tile.

The technique is very flexible and may dynamically re-arrange each tile's rendering resolution at runtime based on the scene content (near or far to the camera, and pixel colour variation within a tile buffer) at a tile's specific location. All related parameters can be changed dynamically at runtime before rendering each frame. For example, the per-tile scale factor can be changed based on some parameters, such as the disabling/enabling of foveation, changing of fovea location, fallout functions, frame buffer content, or z-buffer/coarse z-buffer content.

Instead of using an inefficient non-uniform rasterizer, as in prior art techniques, the efficient uniform rasterizer in modern GPUs can still be used. Because the rendering is tile-based, within each tile, uniform rasterization into an NxN tile buffer may be performed, although some tiles may have a MSAA level different from others.

Only one pass of the rendering pipeline is required, with an additional 2D post-processing, so there is no need to perform the 3D draw-calls multiple times for different VR zones. Only one single Render Target is needed.

This approach is also compatible with some prior techniques, such as single pass multi-view or multi-layer VR stereo rendering.

The modification to the current GPU hardware and driver is very small and therefore the technique it is very easy to implement. There is also no change made to the binning pass, the framebuffer memory structure, or the uniform rasterizer. The original tile resolution is still used for storage and display. No modification is required to any shader code or application rendering code. Since MSAA is supported on virtually all current GPUs, the above technique is easy to apply to other GPUs. The invention has application in VR devices as well as for use in general 3D rendering on mobile devices.

The invention may be modified while achieving essentially the same or similar results in the following ways: Other similar methods may be used to calculate the scale factor for each tile, which may be based on other VR parameters or framebuffer contents.

Other similar methods may be used to calculate the per-tile MSAA level. In the described embodiments, for easy illustration purposes, both X and Y directions are treated equally when calculating MSAA levels and for the final restoring, so that they are 1x, 4x, or 16x, etc in both the X and Y directions. However, anisotropic factors may be used along the X and Y directions separately, in order to have a greater number of possible per-tile MSAA levels, such as 1x, 2x, 4x, 8x, 16x, or 32x, etc.

Other similar methods of post-processing to restore the final high resolution tile-buffer from the rendered low resolution tile-buffer may be used.

Other similar pipeline structures of similar data processing flow may be used.

The invention is defined by the appended claims. In view of the foregoing description it will be evident to a person skilled in the art that various modifications may be made within the scope of the invention.

**Claims**

1. A device for rendering an image in a graphics processing system, the image being divided into a plurality of tiles, each tile having equal size and corresponding several display pixels, the device being configured to, for at least some of the tiles:

   calculate (Step 901), for a tile, in dependence on the prominence of the tile, a sampling density for the respective tile;
   determine (Step 902), for each of a set of rendering pixels overlapping the tile, a set of one or more shading samples, each shading sample representing a shade at a respective location on the tile and the locations collectively having the calculated sampling density in the rendering pixel;
   determine (Step 903), in dependence on the shading sample(s) of a rendering pixel, one or more pixel shade values for display pixels overlapping that rendered pixel;
   **characterized in that** the device is further configured to determine the sampling density of the tile based on a scale down factor which depends on the prominence of the tile;
   wherein the device is configured to calculate the scale down factor so that for the tile located at the center area of the lens, the scale down factor is set to 1.0, whereas for less prominent tiles a smaller scale down factor is calculated that is less than 1.0 based on the respective tile's distance to the foveal area and based on a lens distortion map of a virtual reality lens via 2D texture sampling at the respective tile's location.

2. A device as claimed in claim 1, wherein the sampling density corresponds to a multisample anti-aliasing level.

3. A device as claimed in any one of claims 1 - 2, wherein the device is configured to apply the shading samples for a rendered pixel to one or more display pixels.

4. A device as claimed in any preceding claim, wherein all tiles of the image have the same display resolution.

5. A device as claimed in any preceding claim, wherein the rendering resolution for at least some of the tiles is different to the display resolution of the tiles.

6. A method for rendering an image in a graphics processing system, the image being divided into a plurality of tiles, each tile having equal size and corresponding to several display pixels, the method comprising, for at least some of the tiles:

> calculating (Step 901), for a tile, in dependence on the prominence of the tile, a sampling density for the respective tile;
> determining (Step 902), for each of a set of rendering pixels overlapping the tile, a set of one or more shading samples, each shading sample representing a shade at a respective location on the tile and the locations collectively having the calculated sampling density in the rendering pixel;
> determining (Step 903), in dependence on the shading sample(s) of a rendering pixel, one or more pixel shade values for display pixels overlapping that rendered pixel;
> **characterized in that** the sampling density of the tile is determined based on a scale down factor which depends on the prominence of the tile;
> wherein the scale down factor for the tile is calculated so that for the tile located at the center area of the lens, the scale down factor is set to 1.0, whereas for less prominent tiles a smaller scale down factor is calculated that is less than 1.0 based on the respective tile's distance to the foveal area and based on a lens distortion map of a virtual reality lens via 2D texture sampling at the respective tile's location.

7. A method as claimed in claim 6, wherein the sampling density corresponds to a multisample anti-aliasing level.

8. A method as claimed in any one of claims 6-7, wherein the shading samples for a rendered pixel are applied to one or more display pixels.

9. A method as claimed in any of claims 6 to 8, wherein all tiles of the image have the same display resolution.

10. A method as claimed in any of claims 6 to 9, wherein the rendering resolution for at least some of the tiles is different from the display resolution of the tiles.

11. A computer readable storage medium having stored thereon computer readable instructions that, when executed at a computer system, cause the computer system to perform a method for rendering an image in a graphics processing system, the image being divided into a plurality of tiles, each tile having equal size and corresponding to several display pixels, the method comprising, for at least some of the tiles:

> calculating (Step 901), for a tile, in dependence on the prominence of the tile, a sampling density for the respective tile;
> determining (Step 902), for each of a set of rendering pixels overlapping the tile, a set of one or more shading samples, each shading sample representing a shade at a respective location on the tile and the locations collectively having the calculated sampling density in the rendering pixel;
> determining (Step 903), in dependence on the shading sample(s) of a rendering pixel, one or more pixel shade values for display pixels overlapping that rendered pixel;
> **characterized in that** the sampling density of the tile is determined based on a scale down factor which depends on the prominence of the tile;
> wherein the scale down factor for the tile is calculated so that for the tile located at the center area of the lens, the scale down factor is set to 1.0, whereas for less prominent tiles a smaller scale down factor is calculated that is less than 1.0 based on the respective tile's distance to the foveal area and based on a lens distortion map of a virtual reality lens via 2D texture sampling at the respective tile's location.

**Patentansprüche**

1. Vorrichtung zum Rendern eines Bildes in einem Grafikverarbeitungssystem, wobei das Bild in eine Vielzahl von Kacheln unterteilt ist, wobei jede Kachel eine gleiche Größe und entsprechende mehrere Anzeigepixel aufweist, wobei die Vorrichtung für mindestens einige der Kacheln konfiguriert ist zum:

   Berechnen (Schritt 901), für eine Kachel, in Abhängigkeit von der Hervorhebung der Kachel, einer Abtastdichte für die jeweilige Kachel;
   Bestimmen (Schritt 902), für jeden eines Satzes von Rendering-Pixeln, die die Kachel überlappen, eines Satzes von einem oder mehreren Schattierungsmustern, wobei jedes Schattierungsmuster einen Farbton an einer entsprechenden Stelle auf der Kachel darstellt und die Stellen die berechnete Abtastdichte in dem Rendering-Pixel zusammen aufweisen;
   Bestimmen (Schritt 903), in Abhängigkeit von dem/den Schattierungsmuster(n) eines gerenderten Pixels, eines oder mehrerer Pixelschattierungswerte für Anzeigepixel, die das gerenderte Pixel überlappen;
   **dadurch gekennzeichnet, dass** die Vorrichtung ferner konfiguriert ist, um die Abtastdichte der Kachel basierend auf einem Verkleinerungsfaktor zu bestimmen, der von der Hervorhebung der Kachel abhängt;
   wobei die Vorrichtung konfiguriert ist, um den Verkleinerungsfaktor so zu berechnen, dass für die Kachel, die sich in dem mittleren Bereich der Linse befindet, der Verkleinerungsfaktor auf 1,0 eingestellt wird, wohingegen für weniger hervorgehobene Kacheln ein kleinerer Verkleinerungsfaktor berechnet wird, der kleiner als 1,0 ist, basierend auf dem Abstand der jeweiligen Kachel zu dem Fovealbereich und basierend auf einer Linsenverzerrungskarte einer Virtual-Reality-Linse mittels 2D-Texturabtasten an dem Standort der jeweiligen Kachel.

2. Vorrichtung nach Anspruch 1, wobei die Abtastdichte einem Mehrfachabtastung-Anti-Aliasing-Level entspricht.

3. Vorrichtung nach einem der Ansprüche 1 bis 2, wobei die Vorrichtung konfiguriert ist, um die Schattierungsmuster für ein gerendertes Pixel auf ein oder mehrere Anzeigepixel anzuwenden.

4. Vorrichtung nach einem der vorstehenden Ansprüche, wobei alle Kacheln des Bildes die gleiche Anzeigeauflösung aufweisen.

5. Vorrichtung nach einem der vorstehenden Ansprüche, wobei sich die Rendering-Auflösung für mindestens einige der Kacheln von der Anzeigeauflösung der Kacheln unterscheidet.

6. Verfahren zum Rendern eines Bildes in einem Grafikverarbeitungssystem, wobei das Bild in eine Vielzahl von Kacheln unterteilt ist, wobei jede Kachel eine gleiche Größe aufweist und mehreren Anzeigepixeln entspricht, wobei das Verfahren für mindestens einige der Kacheln umfasst:

   Berechnen (Schritt 901), für eine Kachel, in Abhängigkeit von der Hervorhebung der Kachel, einer Abtastdichte für die jeweilige Kachel;
   Bestimmen (Schritt 902), für jeden eines Satzes von Rendering-Pixeln, die die Kachel überlappen, eines Satzes von einem oder mehreren Schattierungsmustern, wobei jedes Schattierungsmuster einen Farbton an einer entsprechenden Stelle auf der Kachel darstellt und die Stellen die berechnete Abtastdichte in dem Rendering-Pixel zusammen aufweisen;
   Bestimmen (Schritt 903), in Abhängigkeit von dem/den Schattierungsmuster(n) eines gerenderten Pixels, eines oder mehrerer Pixelschattierungswerte für Anzeigepixel, die das gerenderte Pixel überlappen;
   **dadurch gekennzeichnet, dass** die Abtastdichte der Kachel basierend auf einem Verkleinerungsfaktor bestimmt wird, der von der Hervorhebung der Kachel abhängt;
   wobei der Verkleinerungsfaktor für die Kachel so berechnet ist, dass für die Kachel, die sich in dem mittleren Bereich der Linse befindet, der Verkleinerungsfaktor auf 1,0 eingestellt wird, wohingegen für weniger hervorgehobene Kacheln ein kleinerer Verkleinerungsfaktor berechnet wird, der kleiner als 1,0 ist, basierend auf dem Abstand der jeweiligen Kachel zu dem Fovealbereich und basierend auf einer Linsenverzerrungskarte einer Virtual-Reality-Linse mittels 2D-Texturabtasten an dem Standort der jeweiligen Kachel.

7. Verfahren nach Anspruch 6, wobei die Abtastdichte einem Mehrfachabtastung-Anti-Aliasing-Level entspricht.

8. Verfahren nach einem der Ansprüche 6 bis 7, wobei die Schattierungsmuster für ein gerendertes Pixel auf ein oder mehrere Anzeigepixel angewendet werden.

**9.** Verfahren nach einem der Ansprüche 6 bis 8, wobei alle Kacheln des Bildes die gleiche Anzeigeauflösung aufweisen.

**10.** Verfahren nach einem der Ansprüche 6 bis 9, wobei sich die Rendering-Auflösung für mindestens einige der Kacheln von der Anzeigeauflösung der Kacheln unterscheidet.

**11.** Computerlesbares Speichermedium, das computerlesbare Anweisungen darauf gespeichert aufweist, die, wenn sie auf einem Computersystem ausgeführt werden, das Computersystem veranlassen, ein Verfahren zum Rendern eines Bildes in einem Grafikverarbeitungssystem durchzuführen, wobei das Bild in eine Vielzahl von Kacheln unterteilt ist, wobei jede Kachel eine gleiche Größe aufweist und mehreren Anzeigepixeln entspricht, wobei die Vorrichtung für mindestens einige der Kacheln umfasst:

Berechnen (Schritt 901), für eine Kachel, in Abhängigkeit von der Hervorhebung der Kachel, einer Abtastdichte für die jeweilige Kachel;
Bestimmen (Schritt 902), für jeden eines Satzes von Rendering-Pixeln, die die Kachel überlappen, eines Satzes von einem oder mehreren Schattierungsmustern, wobei jedes Schattierungsmuster einen Farbton an einer entsprechenden Stelle auf der Kachel darstellt und die Stellen die berechnete Abtastdichte in dem Rendering-Pixel zusammen aufweisen;
Bestimmen (Schritt 903), in Abhängigkeit von dem/den Schattierungsmuster(n) eines gerenderten Pixels, eines oder mehrerer Pixelschattierungswerte für Anzeigepixel, die das gerenderte Pixel überlappen;
**dadurch gekennzeichnet, dass** die Abtastdichte der Kachel basierend auf einem Verkleinerungsfaktor bestimmt wird, der von der Hervorhebung der Kachel abhängt;
wobei der Verkleinerungsfaktor für die Kachel so berechnet ist, dass für die Kachel, die sich in dem mittleren Bereich der Linse befindet, der Verkleinerungsfaktor auf 1,0 eingestellt wird, wohingegen für weniger hervorgehobene Kacheln ein kleinerer Verkleinerungsfaktor berechnet wird, der kleiner als 1,0 ist, basierend auf dem Abstand der jeweiligen Kachel zu dem Fovealbereich und basierend auf einer Linsenverzerrungskarte einer Virtual-Reality-Linse mittels 2D-Texturabtasten an dem Standort der jeweiligen Kachel.

## Revendications

**1.** Dispositif de restitution d'une image dans un système de traitement de graphiques, l'image étant divisée en une pluralité de pavés, chaque pavé ayant une taille égale et correspondant à plusieurs pixels d'affichage, le dispositif étant configuré pour, pour au moins certains des pavés :

calculer (étape 901), pour un pavé, en fonction de la proéminence du pavé, une densité d'échantillonnage pour le pavé respectif ;
déterminer (étape 902), pour chacun d'un ensemble de pixels de rendu chevauchant le pavé, un ensemble d'un ou plusieurs échantillons d'ombrage, chaque échantillon d'ombrage représentant une ombre à un emplacement respectif sur le pavé et les emplacements ayant collectivement la densité d'échantillonnage calculée dans le pixel de rendu ;
déterminer (étape 903), en fonction du ou des échantillons d'ombrage d'un pixel de rendu, une ou plusieurs valeurs d'ombrage de pixel pour les pixels d'affichage chevauchant ce pixel rendu ;
**caractérisé en ce que** le dispositif est en outre configuré pour déterminer la densité d'échantillonnage du pavé en fonction d'un facteur de réduction qui dépend de la proéminence du pavé ;
dans lequel le dispositif est configuré pour calculer le facteur de réduction de sorte que pour le pavé situé dans la zone centrale de la lentille, le facteur de réduction est défini sur 1,0, tandis que pour les pavés moins proéminents, un facteur de réduction plus petit est calculé qui est inférieur à 1,0 en fonction de la distance du pavé respectif à la zone fovéale et en fonction d'une carte de distorsion de lentille d'une lentille de réalité virtuelle par le biais d'un échantillonnage de texture 2D à l'emplacement du pavé respectif.

**2.** Dispositif selon la revendication 1, dans lequel la densité d'échantillonnage correspond à un niveau d'anti-crénelage multi-échantillons.

**3.** Dispositif selon l'une quelconque des revendications 1 à 2, dans lequel le dispositif est configuré pour appliquer les échantillons d'ombrage pour un pixel rendu à un ou plusieurs pixels d'affichage.

**4.** Dispositif selon l'une quelconque revendication précédente, dans lequel tous les pavés de l'image ont la même résolution d'affichage.

5. Dispositif selon l'une quelconque revendication précédente, dans lequel la résolution de rendu pour au moins certains des pavés est différente de la résolution d'affichage des pavés.

6. Procédé de rendu d'une image dans un système de traitement de graphiques, l'image étant divisée en une pluralité de pavés, chaque pavé ayant une taille égale et correspondant à plusieurs pixels d'affichage, le procédé comprenant, pour au moins certains des pavés :

le calcul (étape 901), pour un pavé, en fonction de la proéminence du pavé, d'une densité d'échantillonnage pour le pavé respectif ;
la détermination (étape 902), pour chacun d'un ensemble de pixels de rendu chevauchant le pavé, d'un ensemble d'un ou plusieurs échantillons d'ombrage, chaque échantillon d'ombrage représentant une ombre à un emplacement respectif sur le pavé et les emplacements ayant collectivement la densité d'échantillonnage calculée dans le pixel de rendu ;
la détermination (étape 903), en fonction du ou des échantillons d'ombrage d'un pixel de rendu, d'une ou plusieurs valeurs d'ombrage de pixel pour les pixels d'affichage chevauchant ce pixel rendu ;
**caractérisé en ce que** la densité d'échantillonnage du pavé est déterminée en fonction d'un facteur de réduction qui dépend de la proéminence du pavé ;
dans lequel le facteur de réduction pour le pavé est calculé de sorte que pour le pavé situé dans la zone centrale de la lentille, le facteur de réduction est fixé à 1,0, tandis que pour les pavés moins proéminents, un facteur de réduction plus petit est calculé qui est inférieur à 1,0 en fonction de la distance du pavé respectif à la zone fovéale et en fonction d'une carte de distorsion de lentille d'une lentille de réalité virtuelle par le biais d'un échantillonnage de texture 2D à l'emplacement du pavé respectif.

7. Procédé selon la revendication 6, dans lequel la densité d'échantillonnage correspond à un niveau d'anti-crénelage d'échantillons multiples.

8. Procédé selon l'une quelconque des revendications 6 et 7, dans lequel les échantillons d'ombrage pour un pixel rendu sont appliqués à un ou plusieurs pixels d'affichage.

9. Procédé selon l'une quelconque des revendications 6 à 8, dans lequel tous les pavés de l'image ont la même résolution d'affichage.

10. Procédé selon l'une quelconque des revendications 6 à 9, dans lequel la résolution de rendu pour au moins certains des pavés est différente de la résolution d'affichage des pavés.

11. Support de stockage lisible par ordinateur sur lequel sont stockées des instructions lisibles par ordinateur qui, lorsqu'elles sont exécutées sur un système informatique, amènent le système informatique à réaliser un procédé pour effectuer un rendu d'une image dans un système de traitement de graphiques, l'image étant divisée en une pluralité de pavés, chaque pavé ayant la même taille et correspondant à plusieurs pixels d'affichage, le procédé comprenant, pour au moins certains des pavés :

le calcul (étape 901), pour un pavé, en fonction de la proéminence du pavé, d'une densité d'échantillonnage pour le pavé respectif ;
la détermination (étape 902), pour chacun d'un ensemble de pixels de rendu chevauchant le pavé, d'un ensemble d'un ou plusieurs échantillons d'ombrage, chaque échantillon d'ombrage représentant une ombre à un emplacement respectif sur le pavé et les emplacements ayant collectivement la densité d'échantillonnage calculée dans le pixel de rendu ;
la détermination (étape 903), en fonction du ou des échantillons d'ombrage d'un pixel de rendu, d'une ou plusieurs valeurs d'ombrage de pixel pour les pixels d'affichage chevauchant ce pixel rendu ;
**caractérisé en ce que** la densité d'échantillonnage du pavé est déterminée en fonction d'un facteur de réduction qui dépend de la proéminence du pavé ;
dans lequel le facteur de réduction pour le pavé est calculé de sorte que pour le pavé situé dans la zone centrale de la lentille, le facteur de réduction est fixé à 1,0, tandis que pour les pavés moins proéminents, un facteur de réduction plus petit est calculé qui est inférieur à 1,0 en fonction de la distance du pavé respectif à la zone fovéale et en fonction d'une carte de distorsion de lentille d'une lentille de réalité virtuelle par le biais d'un échantillonnage de texture 2D à l'emplacement du pavé respectif.

Figure 1

Figure 2

Figure 3

(a)

(b)

(c)

Rendered image grid

distorted image grid

Figure 4

402  403

401

Figure5

Figure 6

Figure 7

(a)

MSAA 4x

(b)

16x MSAA

Figure 8

(a)

(b)

(c)

16× MSAA

4× MSAA

1× MSAA

Figure 9

901

Calculate, for a tile, in dependence on the
prominence of the tile, a sampling density
for the respective tile

902

Determine, for each of a set of rendering pixels
overlapping the tile, a set of one or more shading
samples, each shading sample representing a
shade at a respective location on the tile and the
locations collectively having the calculated
sampling density in the rendering pixel

903

Determine in dependence on the shading
sample(s) of a rendering pixel one or more
pixel shade values for display pixels
overlapping that rendered pixel

Figure 10

1000

GPU
1001

| Tiling module | Rendering module |
|---|---|
| 1002 | 1003 |

Data in →

Processed data out →

| 1004 | 1005 |
|---|---|
| Processor | Memory |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016171816 A1
- US 20140327696 A1
- US 20150287165 A1
- US 20180075584 A1

**Non-patent literature cited in the description**

- **GUENTER, B. ; FINCH, M. ; DRUCKER, S. ; TAN, D. ; SNYDER, J.** Foveated 3D graphics. *ACM Transactions on Graphics,* 2012, vol. 31 (6), 164-1, 164-10
- **K. VAIDYANATHAN et al.** *Coarse Pixel Shading,* 1-10